# EUROPÄISCHE PATENTSCHRIFT

(11) **EP 3 741 016 B1**
(45) Veröffentlichungstag und Bekanntmachung des Hinweises auf die Patenterteilung: **09.10.2024**
(21) Anmeldenummer: 19710311.2
(22) Anmeldetag: 26.02.2019
(51) Int. Cl.: H02B 13/035

(54) **VORRICHTUNG AUFWEISEND EINEN MESSWANDLER UND EINEN ÜBERSPANNUNGSABLEITER**
DEVICE CONTAINING A MEASURING TRANSFORMER AND AN OVERVOLTAGE ARRESTER
DISPOSITIF CONTENANT UN TRANSFORMATEUR DE MESURE ET UN LIMITEUR DE SURTENSION

(30) Priorität: 16.03.2018 DE 102018204076
(43) Veröffentlichungstag der Anmeldung: 25.11.2020
(73) Patentinhaber: Siemens Energy Global GmbH & Co. KG, 81739 München (DE)
(72) Erfinder: BEUTEL, Stefan, 10555 Berlin (DE); KLEINSCHMIDT, Andreas, 16515 Oranienburg (DE)
(86) Internationale Anmeldenummer: PCT/EP2019/054749
(87) Internationale Veröffentlichungsnummer: WO 2019/174909

(56) Entgegenhaltungen:
- JP-A- 2001 085 254
- JP-A- H1 197 264

## Beschreibung

Die Erfindung betrifft eine Vorrichtung aufweisend einen Messwandler mit einer Messsonde.

Eine derartige Vorrichtung ist beispielsweise aus der Europäischen Patentanmeldung EP 2 346 053 A1 bekannt. Die dort beschriebene gasisolierte Hochspannungsmesseinheit weist mehrere Messeinheiten in einem Gasraum eines Gehäuses auf. Über Primärphasenanschlüsse sind die Messeinheiten elektrisch kontaktierbar. Um ein einfaches elektrisches Kontaktieren der Primärphasenanschlüsse zu ermöglichen, ist eine Steckverbindung vorgesehen.

Innerhalb des Gehäuses nehmen die Messeinheiten einen vergleichsweise geringen Raum ein. Ein nicht unerheblicher Teil des Gehäuses ist mit Baugruppen ausgefüllt, welche einer Ausbildung der Steckverbindung dienen.

Die Dokumente JP 2001 085254 A und JP H11 97264 A offenbaren jeweils ein kombiniertes Mess- und Ableitmodul, bei dem ein Messwandler, der eine Messsonde aufweist, mit einem Überspannungsableiter, der einen Ableitstrompfad aufweist, zusammengefasst sind.

Daher ergibt sich als Aufgabe der Erfindung eine effizientere Nutzung des Bauraumes an einem Messwandler mit einer Messsonde zu erzielen.

Erfindungsgemäß wird die Aufgabe bei einer Vorrichtung der eingangs genannten Art mit den Merkmalen des Anspruchs 1 gelöst.

Ein Messwandler dient einem Umsetzen bzw. Erfassen einer physikalischen Größe wie einer elektrischen Spannung oder eines elektrischen Stromes. Die erfasste bzw. umgesetzte physikalische Größe kann einer weiteren Verarbeitung unterzogen werden. Insbesondere an Elektroenergieübertragungseinrichtungen im Mittel-, Hoch- und Höchstspannungsbereich ist beispielsweise ein Messen von physikalischen Größen, wie einer elektrischen Spannung oder einem elektrischen Strom nicht ohne weiteres möglich, da ein Annähern an bzw. ein Eingriff in zur Elektroenergieübertragung vorgesehene Phasenleiter zu Kurz- bzw. Erdschlüssen führen könnten. Entsprechend sind Messwandler bevorzugt in Elektroenergieübertragungseinrichtungen eingesetzt, um den physikalischen Zustand eines Phasenleiters, welcher einer Führung eines elektrischen Stromes, getrieben durch eine Potentialdifferenz, dienen, vorzusehen. Messwandler können dabei bevorzugt einem Erfassen eines elektrischen Stromes oder einer elektrischen Spannung oder auch eines elektrischen Stromes sowie einer elektrischen Spannung in Kombination dienen. Messwandler können dabei nach verschiedenen physikalischen Prinzipien arbeiten. So sind beispielsweise Messwandler bekannt, die unter Nutzung eines transformatorischen Prinzips arbeiten, welche in einer erfindungsgemäßen Ausgestaltung verwendet werden. Der Messwandler weist zumindest eine Messsonde auf, welche dem Erfassen einer physikalischen Größe dienen. Als Messsonde dienen elektrische Wicklungen.

Ein Überspannungsableiter dient einem Schutz eines Phasenleiters, insbesondere der elektrischen Isolation eines Phasenleiters. Bei einem Auftreten einer Überspannung (Überschreitung eines Schwellwertes) kann über einen Ableitstrompfad ein Ableitstrom gegen Erdpotential abgeführt werden, so dass eine Überspannung an dem zu schützenden Phasenleiter durch ein temporäres Durchschalten des Ableitstrompfades abgebaut wird. Nach einem erfolgten Abbau der Überspannung (Unterschreitung eines Schwellwertes) kann der Ableitstrompfad einen hochimpedanten Zustand annehmen, so dass das Vorhandensein eines Erdschlusses über den Ableitstrompfad ausgeschlossen ist. Der Ableitstrompfad weist ein spannungsabhängiges Impedanzelement (impedanzveränderlicher Abschnitt), in Form eines Varistors auf. Neben einem spannungsabhängigen Impedanzelement kann der Ableitstrompfad beispielsweise eine Stichleitung aufweisen, um eine elektrische Kontaktierung mit einem Phasenleiter zu ermöglichen. Überspannungen können beispielsweise durch Schalthandlungen innerhalb eines Elektroenergieübertragungsnetzes oder auch durch äußere Einwirkungen, wie Blitzeinwirkungen, Beschädigungen von Elektroenergieübertragungsleitungen usw. auftreten. Derartige Störzustände können durch eine Erfassung von physikalischen Größen über Messwandler erfasst werden. Bei einer Kombination eines Messwandlers sowie eines Überspannungsableiters in einem Modul kann somit zum einen eine Schutzfunktion durch den Überspannungsableiter vorgenommen werden, zum anderen kann eine Diagnose über die von dem Messwandler gelieferten Daten erfolgen. Somit können in unmittelbarer Nähe zueinander eine Messfunktion und ein Schutz der Elektroenergieübertragungseinrichtung an einem gemeinsamen Mess- und Ableitmodul vorgenommen werden.

Durch eine vorteilhafte räumlich nahe Anordnung und gegenseitige Ergänzung des Überspannungsableiters sowie des Messwandlers kann eine kompakte Baugruppe gebildet werden. Insbesondere beim Einsatz in druckfluidisolierten Elektroenergieübertragungseinrichtungen wie z. B. Schaltanlagen kann ein modularer Aufbau unterstützt werden. Eine druckfluidisolierte Schaltanlage weist im Allgemeinen zumindest ein Kapselungsgehäuse auf, in dessen Inneren ein elektrisch isolierendes Fluid insbesondere unter Überdruck eingekapselt ist, wodurch die Isolationsfestigkeit des elektrisch isolierenden Fluides erhöht ist. Zumindest die Messsonde und der Ableitstrompfad können dabei innerhalb eines derartigen Fluides angeordnet und von diesem umspült sein. Durch die Integration des Ableitstrompfades und der Messsonde innerhalb eines kombinierten Mess- und Ableitmoduls kann der zur Verfügung stehende Bauraum effizient ausgenutzt werden. Beispielsweise können an einer Messsonde eines Messwandlers vorliegende Volumina genutzt werden, um dort einen Ableitstrompfad unterzubringen.

Beispielsweise kann so ein formkomplementärer Aufbau von Messsonde und Ableitstrompfad erfolgen, so dass diese einander ergänzen.

Ein Gehäuse dient einem Einhausen der Messsonde sowie des Ableitstrompfades. Messsonde und Ableitstrompfad können bevorzugt vollständig innerhalb eines gemeinsamen Gehäuses angeordnet sein. Das Gehäuse bildet dabei eine äußere Barriere um die Messsonde sowie den Ableitstrompfad, um diese vor mechanischen Einwirkungen zu schützen. Weiterhin kann das Gehäuse auch einer dielektrischen Schirmung des kombinierten Mess- und Ableitmodules dienen. Das Gehäuse kann dabei bevorzugt als Kapselungsgehäuse ausgebildet sein, d. h. das Kapselungsgehäuse begrenzt einen Fluidaufnahmeraum, welcher durch das Kapselungsgehäuse von der Umgebung hermetisch abgetrennt ist. Innerhalb des Fluidaufnahmeraumes können sich dann die Messsonde bzw. der Ableitstrompfad zumindest teilweise, insbesondere vollständig erstrecken. Durch eine Wandung des Gehäuses hindurch können Leitungen hindurchgeführt sein, z. B. Messleitungen, welche die erforderlichen Daten von der Messsonde nach außerhalb des Gehäuses führen. Es können jedoch auch weitere Leitungen (z. B. Erdungsleitungen) das Gehäuse insbesondere fluiddicht passieren. Vorteilhaft kann vorgesehen sein, dass eine drahtlose Übertragung von Informationen durch das Gehäuse hindurch erfolgt. Die Anordnung eines Fluidaufnahmeraumes innerhalb des Gehäuses weist weiterhin die Möglichkeit auf, den Fluidaufnahmeraum mit einem elektrisch isolierenden Fluid zu fluten und dieses Fluid gegebenenfalls unter Überdruck zu setzen. In diesem Falle kann das Gehäuse, insbesondere ein Kapselungsgehäuse, als Druckbehälter ausgeführt sein. Als elektrisch isolierende Fluide eignen sich beispielsweise gasförmige sowie flüssige Medien. Beispielsweise können fluorhaltige elektrisch isolierende Stoffe wie Schwefelhexafluorid, Fluornitril, Fluorketon oder auch anderweitige Medien wie Kohlendioxid, Stickstoff sowie Gemische mit diesen Stoffen Verwendung finden. Das elektrisch isolierende Fluid kann dabei sowohl die Messsonde als auch den Ableitstrompfad umspülen und einer elektrischen Isolation sowohl der Messsonde als auch des Ableitstrompfades gegeneinander sowie gegenüber dem Gehäuse dienen.

Weiterhin kann vorteilhaft vorgesehen sein, dass die Messsonde und der Ableitstrompfad von einem gemeinsamen hermetisch abgeschlossenen Medium umspült sind.

Ein gemeinsames elektrisch isolierendes Medium, welches sowohl die Messsonde als auch den Ableitstrompfad umspült, ermöglicht es, den Bauraum der Vorrichtung effizient zu nutzen. Durch die Verwendung eines gemeinsamen elektrisch isolierenden Mediums werden am kombinierten Mess- und Ableitmodul zusätzliche Wandungen bzw. Feststoffisolationen vermieden, so dass der Ableitstrompfad und die Messsonde einander räumlich angenähert werden können. Insbesondere bei der Verwendung eines Ableitstrompfades, welcher einen Varistor aufweist und dadurch ein lichtbogenfreies Ändern der Impedanz des Ableitstrompfades ermöglicht, ist ein enges Aneinanderrücken von Ableitstrompfad und Messsonde ermöglicht. Als Varistormaterial können beispielsweise Metalloxide eingesetzt werden, die z. B. blockweise geformt werden. Zum Formen können z. B. Sinterverfahren eingesetzt werden. Um eine ausreichende Spannungsfestigkeit bzw. eine gewünschte Durchbruchspannung des Varistors zu erreichen, können beispielsweise mehrere Blöcke zu einem Stapel zusammengefasst werden. Es können auch mehrere Ableitstrompfade elektrisch parallel zueinander geschaltet werden, um beispielsweise deren Strombelastung zu reduzieren.

Das hermetisch abgeschlossene Medium kann beispielsweise ein Fluid, insbesondere unter Überdruckbeaufschlagung, sein. Dadurch ist weiterhin die Möglichkeit gegeben, Wärme aus der Messsonde bzw. aus dem Ableitstrompfad über das elektrisch isolierende Fluid zu transportieren und diese beispielsweise über ein Gehäuse in die Umgebung des kombinierten Mess- und Ableitmodules abzugeben. Das Gehäuse kann dabei zumindest abschnittsweise aus elektrisch leitfähigem Material gebildet sein, wobei die elektrisch leitfähigen Abschnitte bevorzugt Erdpotential führen. So kann ein elektrisch leitfähiger Abschnitt des Gehäuses als Kontaktierungspunkt für den Ableitstrompfad dienen. Weiterhin kann das Gehäuse jedoch zumindest abschnittsweise auch elektrisch isolierend ausgebildet sein, so dass beispielsweise auch ein Phasenleiter, Anschlussleitungen, Messleitungen usw. elektrisch isoliert durch das Gehäuse hindurchgeführt werden können. Insbesondere bei der Verwendung des Gehäuses als hermetisch abschließendes Kapselungsgehäuse kann dieses mit weiteren Gehäusen, beispielsweise zu einer druckfluidisolierten Schaltanlage zusammengefügt werden, wobei an der Schnittstelle zu weiteren Gehäusen beispielsweise eine fluiddichte druckfeste Barriere bevorzugt elektrisch isolierend wirkend angeordnet sein kann.

Eine weitere vorteilhafte Ausgestaltung kann vorsehen, dass der Messwandler mehrere Messsonden aufweist, welche radial um ein Zentrum verteilt angeordnet sind, und in zumindest einem Sektor zwischen benachbarten Messsonden zumindest ein Ableitstrompfad angeordnet ist.

Messwandler können in verschiedenen Netzkonstellationen zum Einsatz gelangen. Eine übliche Netzkonstellation ist beispielsweise der Einsatz von mehreren Phasenleitern zur Übertragung mehrerer elektrischer Ströme eines mehrphasigen Wechselspannungssystems. In diesem Falle ist für jeden der mehreren Phasenleiter jeweils zumindest eine Messsonde des Messwandlers bzw. für jeden der Phasenleiter zumindest ein entsprechender Ableitstrompfad vorzusehen. Die Messsonden können dabei bevorzugt symmetrisch um ein Zentrum verteilt angeordnet sein, wobei zwischen den Messsonden Sektoren verbleiben, welche der Aufnahme eines Ableitstrompfades dienen können. Ein Ableitstrompfad positioniert sich im Umlauf um das Zentrum jeweils zwischen benachbart angeordneten Messsonden. In einem bevorzugten Falle können die Messsonden symmetrisch im Umlauf um das Zentrum verteilt angeordnet sein, wobei zwischen jeweils zwei benachbarten Messsonden zumindest ein Ableitstrompfad angeordnet ist. Somit ergibt sich im Umlauf um das Zentrum eine bevorzugt wechselweise Abfolge zumindest eines Ableitstrompfades und zumindest einer Messsonde. Der Ableitstrompfad kann dabei auch in mehrere Teilableitstrompfade unterteilt sein. Eine radiale Verteilung ermöglicht es, ein annähernd rotationssymmetrisches Gehäuse oder zumindest abschnittsweise rotationssymmetrisches Gehäuse um das Zentrum herum anzuordnen. So kann beispielsweise auch ein ringförmiger Flansch am Gehäuse, welcher einer Kopplung des Gehäuses mit weiteren Gehäusen dient, koaxial zum Zentrum angeordnet sein.

Vorteilhafterweise kann weiter vorgesehen sein, dass eine Messsonde einen Potentialabgriff aufweist, mit welchem ein erstes Ende des Ableitstrompfades elektrisch kontaktiert ist.

Um der Messsonde ein elektrisches Potential zuführen zu können, kann diese einen Potentialabgriff aufweisen. Der Potentialabgriff dient beispielsweise einer elektrischen Kontaktierung eines zu überwachenden Phasenleiters einer Elektroenergieübertragungseinrichtung. Mittels des Potentialabgriffes ist die Möglichkeit gegeben, insbesondere den Messwandler zur Messung einer elektrischen Spannung zu verwenden. So ist über die Messsonde eine Wandlung der am Potentialabgriff anliegenden zu messenden Spannung ermöglicht. Dazu arbeitet eine Messsonde erfindungsgemäß nach einem transformatorischen Prinzip. Vorteilhaft kann dabei der Potentialabgriff mit einem ersten Ende eines Ableitstrompfades elektrisch kontaktiert sein. Damit wird der Potentialabgriff durch den Ableitstrompfad vor Überspannungen geschützt. In Folge des Schutzes des Potentialabgriffes durch den Ableitstrompfad für Überspannungen wird auch die Messsonde vor Überspannungen und damit vor Überlastungen geschützt. Somit kann neben der verbesserten räumlichen Ausnutzung an ein Mess- und Ableitmodul auch eine Schutzfunktion für die Messsonde über den Ableitstrompfad sichergestellt werden.

Eine weitere vorteilhafte Ausgestaltung kann vorsehen, dass ein zweites Ende des Ableitstrompfades mit Erdpotential kontaktiert ist.

Das zweite Ende des Ableitstrompfades ist das Ende, welches von dem ersten Ende des Ableitstrompfades abgewandt ist, so dass das zweite Ende problemlos mit Erdpotential kontaktiert werden kann. Zwischen den beiden Enden ist ein impedanzveränderlicher Abschnitt in Form eines Varistors angeordnet. Durch das spannungsabhängige Impedanzverhalten des Ableitstrompfades wird im Bereich unterhalb eines Schwellwertes des Ableitstrompfades eine zuverlässige Trennung des Erdpotentials von dem Potentialabgriff der Messsonde erzielt.

Weiterhin ist vorgesehen, dass mehrere Ableitstrompfade parallel zueinander ausgerichtet in Eckpunkten eines Dreiecks angeordnet sind.

Mehrere Ableitstrompfade sind zueinander parallel ausgerichtet. Dabei sind die Parallelen der Ableitstrompfade an den Eckpunkten eines Dreiecks angeordnet, so dass zwischen den Eckpunkten jeweils eine Seite zur Verfügung steht, um eine Messsonde des Messwandlers aufzunehmen. Ein Ableitstrompfad weist eine prismatische Grundform, bevorzugt eine zylindrische Grundform auf. Neben einer günstigen Umströmung und Durchspülung der Ableitstrompfade sowie der Messsonden mit einem elektrisch isolierenden Medium kann so eine dielektrisch stabile Struktur an dem Mess- und Ableitmodul zur Verfügung gestellt werden.

Eine weitere vorteilhafte Ausgestaltung kann vorsehen, dass ein Potentialabgriff der Messsonde als Stichleitung von einem Ableitstrompfad abzweigt.

Bevorzugt kann der Potentialabgriff als Stichleitung zu einem Ableitstrompfad ausgeführt sein. Insbesondere bei der Nutzung eines Messwandlers zur Messung einer elektrischen Spannung ist lediglich eine leistungsarme Übertragung des elektrischen Potentials zu der Messsonde erforderlich, wo hingegen der Ableitstrompfad insbesondere einem zu erwartenden Ableitstrom zu widerstehen hat. Entsprechend ist der Ableitstrompfad in seinem Querschnitt zu dimensionieren, wohingegen ein Potentialabgriff lediglich einer Übertragung einer elektrischen Spannung dient. Entsprechend kann die mechanische Stabilität des Ableitstrompfades genutzt werden, um den Potentialabgriff zu positionieren.

Eine weitere Aufgabe der Erfindung ist es, eine Einrichtung anzugeben, welche die erfindungsgemäße Vorrichtung vorteilhaft zu nutzen in der Lage ist.

Erfindungsgemäß wird die Aufgabe bei einer Elektroenergieübertragungseinrichtung aufweisend einen Phasenleiter und eine Schaltrichtung zum Schalten des Phasenleiters dadurch gelöst, dass die Elektroenergieübertragungseinrichtung eine druckfluidisolierte Schaltanlage ist und eine Vorrichtung nach einer der vorstehend beschriebenen Ausführungsvarianten aufweist.

Eine Elektroenergieübertragungseinrichtung dient einer Übertragung einer elektrischen Energie. Dabei wird ein elektrischer Strom in einem Phasenleiter geleitet und von einer elektrischen Spannung getrieben. Der Phasenleiter ist entsprechend elektrisch zu isolieren. Durch die Schalteinrichtung kann ein Zu- bzw. Abschalten des Phasenleiters vorgenommen werden. Über die Verwendung eines Messwandlers kann beispielsweise der elektrische Strom und/oder die elektrische Spannung, welche den elektrischen Strom treibt, gemessen bzw. gewandelt und außerhalb der Elektroenergieübertragungseinrichtung verarbeitet werden. Bevorzugt kann der Phasenleiter eine fluide Isolation oder auch eine Feststoffisolation aufweisen. Elektroenergieübertragungseinrichtungen werden bevorzugt im Mittel-, Hoch- und Höchstspannungsbereich eingesetzt, d. h. in Spannungsebenen von 6 kV bis 30 kV bzw. von 30 kV bis 550 kV sowie in Spannungsebenen oberhalb von 550 kV, beispielsweise im Bereich von 1.200 kV.

Eine druckfluidisolierte Schaltanlage weist zumindest einen Phasenleiter auf, der von einer Fluidisolation umgeben elektrisch isoliert ist. Die Fluidisolation kann einem Überdruck ausgesetzt sein, so dass die Isolationsfestigkeit des elektrisch isolierenden Fluides zusätzlich verbessert wird. Die druckfluidisolierte Schaltanlage weist dazu zumindest ein Gehäuse auf, welches als Kapselungsgehäuse ausgeführt ist, um in seinem Inneren die Fluidisolation einzuschließen. Entsprechend erstrecken sich im Inneren, also innerhalb eines Fluidaufnahmeraumes der Schaltanlage, zumindest Abschnitte des durch die Schalteinrichtung zu schaltenden Phasenleiters. Bevorzugt kann die Schaltanlage modular aufgebaut sein. Mehrere Gehäuse können miteinander verbunden sein, wobei zwischen den Gehäusen fluiddichte Barrieren angeordnet sein können, so dass jedes Gehäuse darin angeordnete Baugruppen durch ein separates elektrisch isolierendes Fluid elektrisch isolieren kann. Dadurch ist eine modulartige Schaltanlage gegeben, welche auch ein Mess- und Ableitmodul aufweisen kann. Ein Verbinden der einzelnen Module bzw. einzelnen Gehäuse kann beispielsweise über Flansche erfolgen. Die Flansche können dabei lösbar miteinander verbunden sein. Es kann jedoch auch vorgesehen sein, dass ein unlösbares Verbinden der Flansche beispielsweise durch Schweißverbindungen vorgesehen ist.

Im Folgenden wird ein Ausführungsbeispiel der Erfindung schematisch in einer Zeichnung gezeigt und nachfolgend näher beschrieben.

Dabei zeigt die
- Figur 1:: eine Seitenansicht einer Elektroenergieübertragungseinrichtung; die
- Figur 2:: ein Mess- und Ableitmodul perspektivisch geschnitten; die
- Figur 3:: das aus der Figur 2 bekannte Mess- und Ableitmodul perspektivisch freigeschnitten; die
- Figur 4:: das aus der Figur 2 bekannte Mess- und Ableitmodul freigeschnitten in einer Draufsicht und die
- Figur 5:: eine Abwandlung des in Figur 3 freigeschnitten gezeigten Mess- und Ableitmoduls.

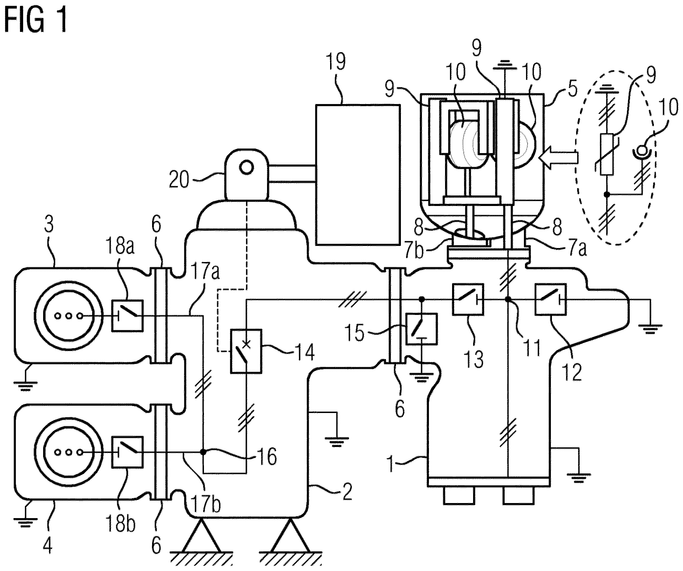

Zunächst soll anhand der Figur 1 exemplarisch ein Aufbau einer Elektroenergieübertragungseinrichtung beschrieben werden. Bei der in der Figur 1 gezeigten Elektroenergieübertragungseinrichtung handelt es sich um eine so genannte gasisolierte (druckfluidisolierte) Schaltanlage. Die gasisolierte Schaltanlage ist modular aufgebaut und weist mehrere Gehäuse 1, 2, 3, 4, 5 auf. Vorliegend ist ein Kabelanschlussgehäuse 1 mit einem Leistungsschaltergehäuse 2 verflanscht. Am Leistungsschaltergehäuse 2 sind ein erstes Sammelschienengehäuse 3 sowie ein zweites Sammelschienengehäuse 4 angeflanscht. Am Kabelanschlussgehäuse 1 ist ein gemeinsames Gehäuse 5 angeflanscht. Die einzelnen Gehäuse 1, 2, 3, 4, 5 sind jeweils über Schraubflansche miteinander verflanscht, wobei in die Flansche jeweils eine elektrisch isolierende Barriere in Form eines oder mehrerer Scheibenisolatoren 6, 6a eingefügt sind. Bis auf die Verflanschung von dem gemeinsamen Gehäuse 5 mit dem Kabelanschlussgehäuse 1 handelt es sich jeweils um einen gemeinsamen Scheibenisolator 6, 6a welcher eine fluiddichte Barriere über den jeweiligen Flanschöffnungen aufspannt, wobei die jeweiligen Scheibenisolatoren 6, 6a von mehreren Phasenleitern fluiddicht durchsetzt sind. Dadurch ist jedes der Gehäuse 1, 2, 3, 4, 5 an den jeweiligen Flanschen hermetisch verschlossen.

Eine Verflanschung zwischen dem Kabelanschlussgehäuse 1 sowie dem gemeinsamen Gehäuse 5 derart vorgesehen, dass das gemeinsame Gehäuse 5 drei Einzelstutzen 7a, 7b, 7c aufweist, die jeweils an ihrem, dem Kabelanschlussgehäuse 1 zugewandten Ende einen separaten Scheibenisolator 6a aufweisen, welcher den jeweiligen Anschlussstutzen 7a, 7b, 7c fluiddicht verschließt, wobei die Scheibenisolatoren 6a jeweils von einer Stichleitung 8 (Phasenleiter) fluiddicht durchsetzt sind. Die Scheibenisolatoren 6, 6a sind dabei derart aufgebaut, dass zum Aufnehmen von Verspannkräften zwischen den Flanschen jeweils ein versteifender Rahmen außenmantelseitig umlaufend angeordnet ist, so dass Verspannkräfte zwischen den Flanschen der Gehäuse 1, 2, 3, 4, 5 über die Scheibenisolatoren 6, 6a hinweg übertragen werden können.

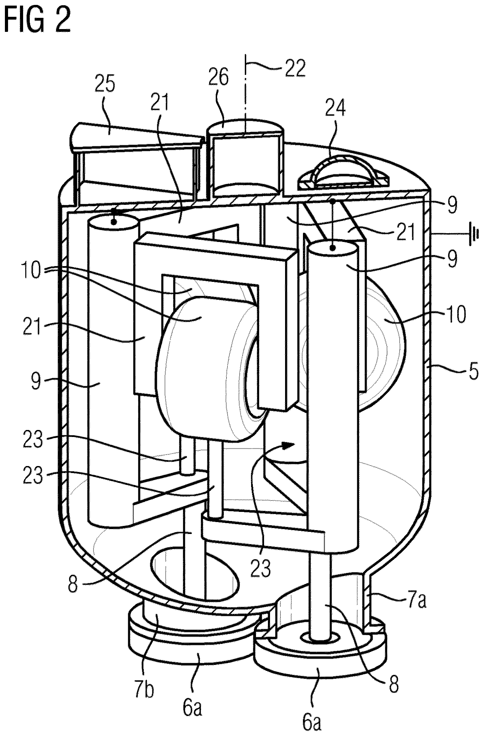

Der innere Aufbau des gemeinsamen Gehäuses 5 ist in der Figur 1 perspektivisch angedeutet. Den Figuren 2 bis 4 ist eine nähere Darstellung des Inneren des gemeinsamen Gehäuses 5 entnehmbar. An den weiteren Gehäusen 1, 2, 3, 4 ist jeweils ein Single-Line-Diagramm die einzelnen Gehäuse 1, 2, 3, 4 überlagernd dargestellt. Um die Systematik auch für das gemeinsame Gehäuse 5 abzubilden, ist ein mit einer unterbrochenen Volllinie dargestellter Ausschnitt des Single-Line-Diagrammes neben dem gemeinsamen Gehäuse 5 dargestellt.

Die einzelnen Gehäuse 1, 2, 3, 4, 5 weisen in ihrem Innern jeweils einen Fluidaufnahmeraum auf. Die Fluidaufnahmeräume der einzelnen Gehäuse 1, 2, 3, 4, 5 sind jeweils voneinander separiert und hausen in ihrem Inneren jeweils ein elektrisch isolierendes Fluid hermetisch ein. Bevorzugt handelt es sich bei den Gehäusen 1, 2, 3, 4, 5 um Druckbehälter, so dass das im Innern der Fluidaufnahmeräume angeordnete elektrisch isolierende Fluid unter einen Überdruck gesetzt werden kann. Bevorzugt handelt es sich bei dem Fluid um ein Gas, beispielsweise ein Gas mit Fluorkomponente, wie Schwefelhexafluorid, Fluornitril, Fluorketon oder einem anderweitigen elektrisch isolierenden Stoff wie Stickstoff, Kohlendioxid oder Gemische mit diesen Medien. Die Gehäuse 1, 2, 3, 4, 5 sind jeweils im Wesentlichen aus einem elektrisch leitenden Material gefertigt, wobei die elektrisch leitenden Abschnitte der Gehäuse 1, 2, 3, 4, 5 mit Erdpotential beaufschlagt sind.

Über die in Seitenansicht gezeigten Gehäuse 1, 2, 3, 4, 5 ist ein Single-Line-Diagramm gelegt. Am Kabelanschlussgehäuse 1 auf der von dem gemeinsamen Gehäuse 5 abgewandten Seite ist ein Kabelanschluss angeordnet. Dort ist es möglich, mittels Kabeln die Elektroenergieübertragungseinrichtung elektrisch anzubinden. Die Kabel setzten sich im Innern des Kabelanschlussgehäuses zumindest abschnittsweise fort und gehen dort in Phasenleiter über, die jeweils fluidisoliert im Innern des Kabelanschlussgehäuses 1 elektrisch isoliert gehalten sind. Vorliegend handelt es sich um drei Phasenleiter, die der Übertragung eines dreiphasigen Stromsystems dienen. Die Phasenleiter des Kabelanschlussgehäuses 1 erstrecken sich weiter durch die Verflanschung mit dem gemeinsamen Gehäuse 5 in das gemeinsame Gehäuse 5 hinein. Dort ist jeder der Phasenleiter mit einem Ableitstrompfad 9 verbunden. Die Ableitstrompfade 9 weisen jeweils ein spannungsabhängiges Impedanzelement (Varistor) auf. An einem ersten Ende der Ableitstrompfade 9 ist jeweils ein Potentialabgriff 23 vorgesehen, welcher zu einer Messsonde 10 eines Messwandlers führt. Bei den Messsonden 10 handelt es sich jeweils um eine Wicklung, welche auf Basis des transformatorischen Prinzips ein elektrisches Potential, welches am Potentialabgriff 23 anliegt, transformiert, so dass der Messwandler ein definiertes Ausgangssignal abgibt. Als solches handelt es sich bei dem Messwandler um einen so genannten Spannungswandler, da die elektrischen Potentiale der Phasenleiter, wie im Innern des Gehäuses 1 vorliegend, erfasst werden können.

Mit einem zweiten Ende ist der jeweilige Ableitstrompfad 9 mit Erdpotential verbunden. Dabei wird das Erdpotential des gemeinsamen Gehäuses 5 genutzt, um das zweite Ende des Ableitstrompfades 9 im Innern des gemeinsamen Gehäuses 5 mit Erdpotential kontaktieren zu können.

In Innern des Kabelanschlussgehäuses 1 ist ein Knotenpunkt 11 für die Phasenleiter gebildet. Ausgehend von dem Knotenpunkt 11 ist es möglich, die Phasenleiter über einen Schnellerdungsschalter 12 elektrisch zu erden. Damit ist die Möglichkeit gegeben, unabhängig vom Schaltzustand der Elektroenergieübertragungseinrichtung die Phasenleiter der Kabel, welche im Kabelanschlussgehäuse 1 münden, mit Erdpotential zu beaufschlagen. Weiterhin ist vom Knotenpunkt 11 ausgehend ein Phasenleiterstrang in das Leistungsschaltergehäuse 2 überführt. In diesem Phasenleiterstrang ist ein Kabeltrennschalter 13 angeordnet. Über den Kabeltrennschalter 13 kann der im Innern des Leistungsschaltergehäuses 2 befindliche Leistungsschalter 14 von den im Innern des Kabelanschlussgehäuses 1 mündenden Kabeln abgetrennt werden. Weiterhin ist im Kabelanschlussgehäuse 1 ein Erdungsschalter 15 angeordnet. Über den Erdungsschalter 15 ist ein Erden der Phasenleiter des Phasenleiterstranges zu dem Leistungsschalter 14 ermöglicht. Ebenso wie beim Schnellerdungsschalter 12 dient das Kabelanschlussgehäuse 1 als Erdungspunkt.

Ausgangsseitig ist am Leistungsschalter 14 eine Verzweigung 16 der Phasenleiter vorgesehen. Über die Verzweigung 16 werden die Phasenleiter in einen ersten Strang 17a sowie einen zweiten Strang 17b verzweigt. Die Stränge 17a, 17b passieren jeweils eine Verflanschung des Leistungsschaltergehäuses 2 zu den beiden Sammelschienengehäusen 3, 4. In jeden der Sammelschienengehäuse 3, 4 ist in dem jeweiligen Strang 17a, 17b ein Sammelschienentrennschalter 18a, 18b angeordnet. Über die Sammelschienentrennschalter 18a, 18b ist ein Abtrennen des jeweiligen Stranges 17a, 17b von Sammelschienen ermöglicht.

Dabei dienen die Sammelschienengehäuse 3, 4 einem Anschluss der beiden Stränge 17a, 17b an jeweils eine Sammelschiene, welche im Wesentlichen lotrecht zur Zeichenebene innerhalb der Sammelschienengehäuse 3, 4 verlaufen. Entsprechend sind in der Figur 1 in der Zeichenebene der beiden Sammelschienengehäuse 3, 4 jeweils offene Flanschstutzen dargestellt, über welche ein Ankoppeln weiterer Elektroenergieübertragungseinrichtungen, wie in der Figur 1 dargestellt, vorgenommen werden kann.

Eine Antriebsbewegung kann über eine Antriebseinrichtung 19, unter Zwischenschaltung eines Einkoppelgetriebes 20 auf zumindest ein bewegbares Schaltkontaktstück des Leistungsschalters 14 übertragen werden.

Anhand der Figuren 2, 3 und 4 soll nunmehr der Aufbau des gemeinsamen Gehäuses 5 nebst darin angeordneter Ableitstrompfade 9 sowie Messsonden 10, wie aus der Figur 1 bekannt, näher beschrieben werden.

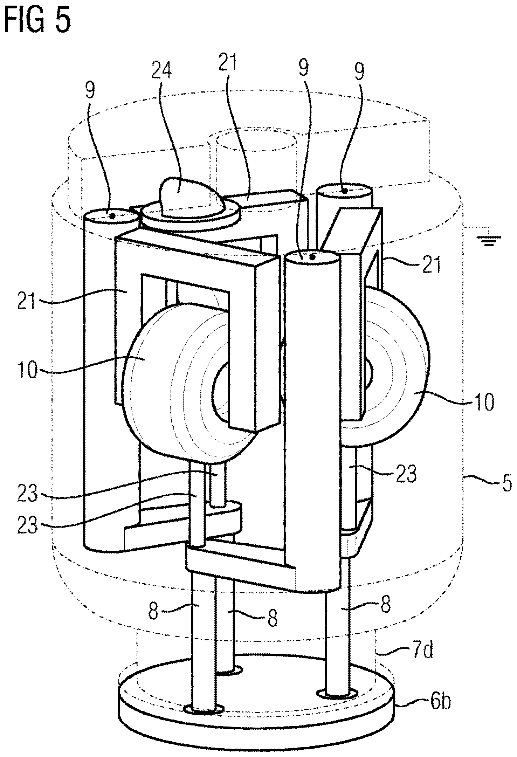

Die Figur 2 zeigt eine perspektivische Ansicht des gemeinsamen Gehäuses 5. Dabei ist das gemeinsame Gehäuse 5 freigeschnitten, so dass einer der Anschlussstutzen 7a im Schnitt erkenntlich ist sowie ein weiterer Anschlussstutzen 7b außerhalb des Schnittes liegt. Ein dritter Anschlussstutzen 7c ist durch die Freischneidung der Figur 2 nicht sichtbar. Die Anschlussstutzen 7a, 7b sind an ihren freien Enden, welche einer Verflanschung mit dem Kabelanschlussgehäuse 1 dienen, jeweils von Scheibenisolatoren 6a verschlossen. Man erkennt anhand des Scheibenisolators 6a, welcher den ersten Anschlussstutzen 7a verschließt, dass am äußeren Umfang eine Verstärkung des Scheibenisolators 6a vorgenommen wurde, um Kräfte zwischen den Flanschen über die Scheibenisolatoren 6a hinweg übertragen zu können. Jeder der Anschlussstutzen 7a, 7b, 7c ist jeweils zentrisch von einer Stichleitung 8 durchsetzt. Die Stichleitungen 8 sind dabei jeweils zentrisch in den Scheibenisolatoren 6a gehalten und fluiddicht in diese eingesetzt. Dadurch verschließen die Scheibenisolatoren 6a die Anschlussstutzen 7a, 7b, 7c fluiddicht. Alternativ kann auch hier analog zu den weiteren Flanschen, wie in der Figur 1 gezeigt und beschrieben, ein einziger Flansch mit einem gemeinsamen Scheibenisolator Verwendung finden, durch welchen drei Stichleitungen 8 fluiddicht hindurchgeführt sind (vgl. Figur 5). Die Stichleitungen 8 verbinden die Phasenleiter von dem Knotenpunkt 11 im Innern des Kabelanschlussgehäuses 1 mit den Ableitstrompfaden 9. Die Stichleitungen 8 münden jeweils in einem Ableitstrompfad 9. Die Ableitstrompfade 9 sind mit einem ersten Ende jeweils mit der jeweiligen Stichleitung 8 verbunden. An ihrem zweiten Ende, also dem Ende der Ableitstrompfade 9, welche von der Stichleitung 8 abgewandt sind, sind die Ableitstrompfade 9 mit dem gemeinsamen Gehäuse 5 elektrisch leitend kontaktiert, wobei das gemeinsame Gehäuse 5 dort elektrisch leitend ausgebildet ist und Erdpotential führt. Dadurch ist eine vereinfachte Potentialbeaufschlagung der Ableitstrompfade 9 mit Erdpotential gegeben. Die Ableitstrompfade 9 weisen dabei in ihrem Verlauf jeweils einen Varistor auf, welcher spannungsabhängig seine Impedanz ändert. Unterhalb eines Schwellwertes einer elektrischen Spannung, welche am ersten Ende der Stichleitung 8 anliegt, weist der Impedanzwert der Ableitstrompfade 9 einen nahezu unendlichen Betrag auf, so dass über den jeweiligen Ableitstrompfad 9 von der jeweiligen Stichleitung 8 ausgehend nur ein vernachlässigbar kleiner Leckagestrom fließen kann. Mit einem Überschreiten eines Schwellwertes auf der Stichleitung 8 ändert sich das Impedanzverhalten des Ableitstrompfades 9, der Varistor steuert durch und seine Impedanz tendiert gegen Null, so dass ein Ableitstrom getrieben von einer Überspannung auf der Stichleitung 8 gegen Erdpotential abfließen kann, wodurch die Überspannung auf der Stichleitung 8 abgebaut werden kann.

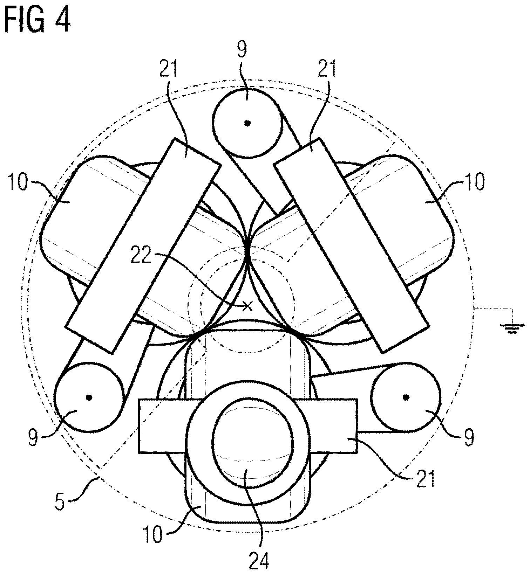

Vorliegend ist eine dreiphasige Ausführung eines kombinierten Mess- und Ableitmodules vorgesehen, was sich darin ausdrückt, dass innerhalb des gemeinsamen Gehäuses 5, drei Stichleitungen 8 und drei Ableitstrompfade 9 angeordnet sind, wobei sowohl die Ableitstrompfade 9 als auch die Stichleitungen 8 jeweils im Wesentlichen parallel zueinander ausgerichtet und jeweils an den Eckpunkten eines Dreieckes angeordnet sind (vgl. Draufsicht Figur 4). In den Seiten des Dreieckes liegen jeweils die Messsonden 10 des Messwandlers. Die Messsonden 10 weisen jeweils eine Wicklung auf, deren Wickelachse parallel zu den Seiten des von den Ableitstrompfaden 9 gebildeten Dreiecks liegen. Um die Messgenauigkeit der Messsonden weiter zu erhöhen, sind diese jeweils von Eisenkernen 21 durchsetzt. Die Eisenkerne 21 liegen dabei ebenfalls in den Seiten des Dreiecks, welches von den Ableitstrompfaden 9 gebildet ist. Dadurch sind die Messsonden 10 nebst Eisenkernen 21 radial um ein Zentrum verteilt angeordnet, so dass zwischen zwei benachbarten Messsonden 10 jeweils ein Ableitstrompfad 9 befindlich ist. Das Zentrum, um welches die Messsonden 10 verteilt angeordnet sind, ist dabei mit einer Rotationsachse 22 deckungsgleich, zu welcher das gemeinsame Gehäuse 5 im Wesentlichen rotationssymmetrisch ausgebildet ist. Dadurch kann dem gemeinsamen Gehäuse 5 ein im Wesentlichen kreisförmiger Querschnitt verliehen werden.

Von den Ableitstrompfaden 9 ausgehend zweigen Potentialabgriffe 23 als Stichleitung ab. Über die Potentialabgriffe 23 sind die Messonden 10 jeweils mit einem elektrischen Potential der Phasenleiter beaufschlagt.

Das gemeinsame Gehäuse 5 weist an seinem von den Anschlussstutzen 7a, 7b, 7c abgewandten Ende einen abnehmbaren Verschlussdeckel auf, welcher fluiddicht mit einem Grundkörper des gemeinsamen Gehäuses 5 verbunden ist. Der Deckel ist mit entsprechenden Anbauten versehen. So ist beispielsweise ein Berstanbau 24 am Deckel angeordnet. Der Berstanbau 24 bildet eine Sicherheitsvorrichtung, falls im Innern des gemeinsamen Gehäuses 5 ein unzulässiger Überdruck entstehen sollte, so dass hier eine Sollbruchstelle in der fluiddichten Barriere des gemeinsamen Gehäuses 5 gebildet ist. Weiterhin ist am Deckel ein Anschlusskasten 25 angeordnet, über welchen beispielsweise Messleitungen der Messsonden 10 nach außen geführt werden können. Bedarfsweise kann weiterhin eine Trennvorrichtung 26 am Deckel gelagert sein. Mittels der Trennvorrichtung 26 kann bedarfsweise ein Auftrennen des mit Erdpotential beaufschlagten zweiten Endes des Ableitstrompfades 9 vorgenommen werden. Dadurch sind beispielsweise Inbetriebnahmeprüfungen erleichtert möglich.

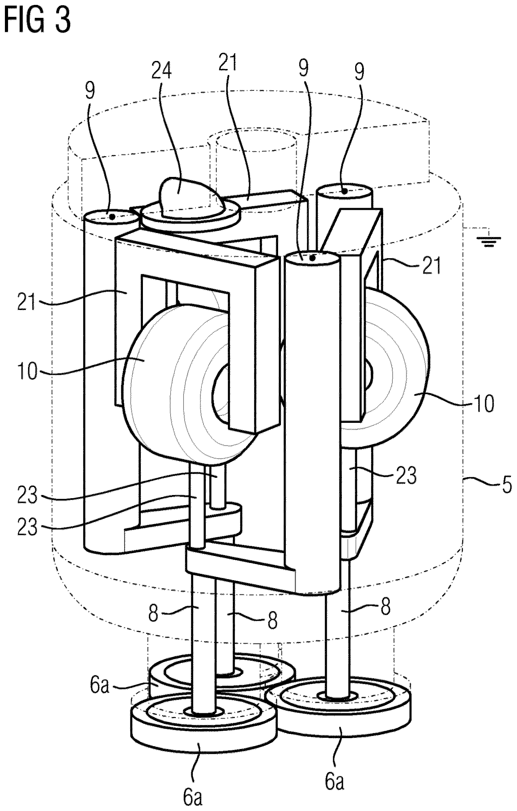

Die Figur 3 zeigt in einer Perspektive die Ableitstrompfade 9, die Messsonden 10 sowie die Stichleitungen 8 mit den Scheibenisolatoren 6a, wobei das gemeinsame Gehäuse 5 freigeschnitten ist. Lediglich einzelne konzentrische Ringe symbolisieren Abmessungen des gemeinsamen Gehäuses 5.

In der Draufsicht der Figur 4 ist analog zur Figur 3 auf die Darstellung des gemeinsamen Gehäuses 5 verzichtet worden. Erkennbar wird die Lage der Ableitstrompfade 9 mit ihren Anordnungen an den Eckpunkten eines Dreieckes, hier eines gleichseitigen Dreieckes, wobei die Ableitstrompfade 9 jeweils zwischen benachbart zueinander angeordneten Messsonden 10 positioniert sind.

Die Figur 5 zeigt eine Abwandlung des in der Figur 3 freigeschnitten gezeigten Mess- und Ableitmoduls. Statt der Nutzung von drei Scheibenisolatoren 6a, von denen jeder separat eine Stichleitung 8 positioniert und jeweils an einem separaten Anschlussstutzen 7a, 7b, 7c angeordnet ist, ist hier ein Scheibenisolator 6b genutzt, welcher drei Stichleitungen 8 elektrisch isoliert positioniert. Die drei Stichleitungen 8 durchsetzen den Scheibenisolator 6b fluiddicht, so dass der Scheibenisolator 6b einen die Stichleitungen 8 umgebenden gemeinsamen Anschlussstutzen 7d abschließt.

## Patentansprüche

1. Vorrichtung aufweisend einen Messwandler mit einer Messsonde (10), bei der
die Vorrichtung einen Überspannungsableiter mit einem Ableitstrompfad (9) aufweist und die Messsonde (10) und der Ableitstrompfad (9) in einem kombinierten Mess- und Ableitmodul zusammengefasst sind,
das kombinierte Mess- und Ableitmodul in dreiphasiger Ausführung gegeben ist,
innerhalb eines gemeinsamen Gehäuses (5), drei Stichleitungen (8) und drei Ableitstrompfade (9) angeordnet sind,
sowohl die Ableitstrompfade (9) als auch die Stichleitungen (8) jeweils im Wesentlichen parallel zueinander ausgerichtet und jeweils an den Eckpunkten eines Dreieckes angeordnet sind, wobei die Ableitstrompfade (9) in ihrem Verlauf jeweils einen Varistor aufweisen,
**dadurch gekennzeichnet, dass**
in den Seiten des Dreieckes jeweils die Messsonden (10) des Messwandlers liegen,
die Messsonden (10) jeweils eine Wicklung aufweisen, deren Wickelachse parallel zu den Seiten des von den Ableitstrompfaden (9) gebildeten Dreiecks liegen, wobei die jeweilige Wicklung eingerichtet ist, auf Basis des transformatorischen Prinzips ein elektrisches Potential zu transformieren.

2. Vorrichtung nach Anspruch 1,
**dadurch gekennzeichnet, dass**
die Messsonden (10) jeweils von Eisenkernen (21) durchsetzt sind.

3. Vorrichtung nach Anspruch 2,
**dadurch gekennzeichnet, dass**
die Eisenkerne (21) in den Seiten des Dreiecks liegen, welches von den Ableitstrompfaden (9) gebildet ist.

4. Vorrichtung nach einem der Ansprüche 2 bis 3,
**dadurch gekennzeichnet, dass**
die Messsonden (10) nebst Eisenkernen (21) radial um ein Zentrum verteilt angeordnet sind, so dass zwischen zwei benachbarten Messsonden (10) jeweils ein Ableitstrompfad (9) befindlich ist.

5. Vorrichtung nach Anspruch 4,
**dadurch gekennzeichnet, dass**
das Zentrum, um welches die Messsonden (10) verteilt angeordnet sind, mit einer Rotationsachse (22) deckungsgleich ist, zu welcher das gemeinsame Gehäuse (5) im Wesentlichen rotationssymmetrisch ausgebildet ist.

6. Vorrichtung nach einem der Ansprüche 1 bis 5,
**dadurch gekennzeichnet, dass**
das gemeinsame Gehäuse (5) einen im Wesentlichen kreisförmigen Querschnitt aufweist.

7. Vorrichtung nach einem der Ansprüche 1 bis 6,
**dadurch gekennzeichnet, dass**
von den Ableitstrompfaden (9) ausgehend Potentialabgriffe (23) als Stichleitung (8) abzweigen.

8. Vorrichtung nach einem der Ansprüche 1 bis 7,
**dadurch gekennzeichnet, dass**
über die Potentialabgriffe (23) die Messonden (10) jeweils mit einem elektrischen Potential der Phasenleiter beaufschlagt sind.

9. Vorrichtung nach einem der Ansprüche 1 bis 8,
**dadurch gekennzeichnet, dass**
die Messsonde (10) und der Ableitstrompfad (9) von einem gemeinsamen hermetisch abgeschlossenen Medium umspült sind.

10. Vorrichtung nach einem der Ansprüche 1 bis 9,
**dadurch gekennzeichnet, dass**
der Messwandler mehrere Messsonden (10) aufweist, welche radial um ein Zentrum (22) verteilt angeordnet sind, und in zumindest einem Sektor zwischen benachbarten Messsonden (10) zumindest ein Ableitstrompfad (9) angeordnet ist.

11. Vorrichtung nach einem der Ansprüche 1 bis 10,
**dadurch gekennzeichnet, dass**
eine Messsonde (10) einen Potentialabgriff (23) aufweist, mit welchem ein erstes Ende des Ableitstrompfades (9) elektrisch kontaktiert ist.

12. Vorrichtung nach Anspruch 11,
**dadurch gekennzeichnet, dass**
ein zweites Ende des Ableitstrompfades (9) mit Erdpotential kontaktiert ist.

13. Vorrichtung nach einem der Ansprüche 1 bis 12,
**dadurch gekennzeichnet, dass**
ein gleichseitiges Dreieck gegeben ist.

14. Elektroenergieübertragungseinrichtung aufweisend einen Phasenleiter und eine Schalteinrichtung (13, 14, 15, 18a, 18b) zum Schalten des Phasenleiters,
**dadurch gekennzeichnet, dass**
die Elektroenergieübertragungseinrichtung eine druckfluidisolierte Schaltanlage ist und eine Vorrichtung nach einem der Ansprüche 1 bis 13 aufweist.

## Claims

1. Device comprising a measuring transformer having a measuring probe (10), in which
the device comprises a surge arrester having an arrester current path (9), and the measuring probe (10) and the arrester current path (9) are integrated in a combined measuring and arrester module,
the combined measuring and arrester module is provided in a three-phase embodiment,
three spur lines (8) and three arrester current paths (9) are arranged within a common housing (5),
both the arrester current paths (9) and the spur lines (8) are respectively oriented essentially parallel to one another, and are respectively arranged at the vertices of a triangle, wherein the arrester current paths (9) each comprise a varistor in their profile,
**characterized in that**
the measuring probes (10) of the measuring transformer are each situated in the sides of the triangle,
the measuring probes (10) each comprise a winding, the winding axes of which lie parallel to the sides of the triangle formed by the arrester current paths (9), wherein the respective winding is configured to transform an electrical potential on the basis of the transformer principle.

2. Device according to Claim 1,
**characterized in that**
the measuring probes (10) are each penetrated by iron cores (21) .

3. Device according to Claim 2,
**characterized in that**
the iron cores (21) are situated in the sides of the triangle that is formed by the arrester current paths (9).

4. Device according to either of Claims 2 and 3,
**characterized in that**
the measuring probes (10), together with iron cores (21), are arranged so as to be radially distributed about a centre point, such that in each case an arrester current path (9) is located between two adjacent measuring probes (10).

5. Device according to Claim 4,
**characterized in that**
the centre point about which the measuring probes (10) are arranged so as to be distributed is congruent with an axis of rotation (22), about which the common housing (5) is formed in an essentially rotationally symmetrical manner.

6. Device according to one of Claims 1 to 5,
**characterized in that**
the common housing (5) has an essentially circular cross-section.

7. Device according to one of Claims 1 to 6,
**characterized in that**
potential taps (23) branch off from the arrester current paths (9) as a spur line (8) .

8. Device according to one of Claims 1 to 7,
**characterized in that**
an electrical potential of the phase conductors is respectively applied to the measuring probes (10) via the potential taps (23).

9. Device according to one of Claims 1 to 8,
**characterized in that**
a common hermetically sealed medium flows around the measuring probe (10) and the arrester current path (9).

10. Device according to one of Claims 1 to 9,
**characterized in that**
the measuring transformer comprises a plurality of measuring probes (10), which are arranged so as to be radially distributed about a centre point (22), and at least one arrester current path (9) is arranged in at least one sector between adjacent measuring probes (10).

11. Device according to one of Claims 1 to 10,
**characterized in that**
a measuring probe (10) comprises a potential tap (23), by means of which a first end of the arrester current path (9) is electrically contact-connected.

12. Device according to Claim 11,
**characterized in that**
a second end of the arrester current path (9) is contact-connected to earth potential.

13. Device according to one of Claims 1 to 12,
**characterized in that**
it is in the form of an equilateral triangle.

14. Electrical energy transmission apparatus comprising a phase conductor and a switching apparatus (13, 14, 15, 18a, 18b) for switching the phase conductor,
**characterized in that**
the electrical energy transmission apparatus is a pressurized fluid-insulated switchgear assembly and comprises a device according to one of Claims 1 to 13.

## Revendications

1. Dispositif présentant un convertisseur de mesure muni d'une sonde de mesure (10), dans lequel :
le dispositif présente un dérivateur de surtension avec un trajet de courant de fuite (9) et la sonde de mesure (10) et le trajet de courant de fuite (9) sont rassemblés en un module combiné de mesure et de dérivation,
le module combiné de mesure et de dérivation est fourni en version triphasée,
trois lignes de branchement (8) et trois trajets de courant de fuite (9) sont agencés à l'intérieur d'un boîtier commun (5),
les trajets de courant de fuite (9) ainsi que les lignes de branchement (8) sont respectivement orientés de manière essentiellement parallèle les uns par rapport aux autres et sont respectivement agencés aux sommets d'un triangle, dans lequel les trajets de courant de fuite (9) présentent respectivement une varistance sur leur tracé,
**caractérisé en ce que** les sondes de mesure (10) du convertisseur de mesure se trouvent respectivement sur les côtés du triangle,
les sondes de mesure (10) présentent respectivement un enroulement dont l'axe d'enroulement est parallèle aux côtés du triangle formé par les trajets de courant de fuite (9), l'enroulement respectif étant conçu afin de transformer un potentiel électrique en se basant sur le principe de la transformation.

2. Dispositif selon la revendication 1,
**caractérisé en ce que** les sondes de mesure (10) sont respectivement traversées par des noyaux de fer (21).

3. Dispositif selon la revendication 2,
**caractérisé en ce que** les noyaux de fer (21) se trouvent sur les côtés du triangle formé par les trajets de courant de fuite (9).

4. Dispositif selon l'une quelconque des revendications 2 à 3,
**caractérisé en ce que** les sondes de mesure (10) ainsi que les noyaux de fer (21) sont agencés de manière radialement répartie autour d'un centre, de sorte qu'entre deux sondes de mesure (10) voisines se trouve respectivement un trajet de courant de fuite (9).

5. Dispositif selon la revendication 4,
**caractérisé en ce que** le centre autour duquel les sondes de mesure (10) sont agencées de manière radialement répartie coïncide avec un axe de rotation (22) par rapport auquel le boîtier commun (5) est réalisé de manière à présenter essentiellement une symétrie de rotation.

6. Dispositif selon l'une quelconque des revendications 1 à 5,
**caractérisé en ce que** le boîtier commun (5) présente une section transversale essentiellement circulaire.

7. Dispositif selon l'une quelconque des revendications 1 à 6,
**caractérisé en ce que** des prises de potentiel (23) dérivent des trajets de courant de fuite (9) sous forme de lignes de branchement (8).

8. Dispositif selon l'une quelconque des revendications 1 à 7,
**caractérisé en ce que** les sondes de mesure (10) sont respectivement alimentées par un potentiel électrique des conducteurs de phase par l'intermédiaire des prises de potentiel (23).

9. Dispositif selon l'une quelconque des revendications 1 à 8,
**caractérisé en ce que** la sonde de mesure (10) et le trajet de courant de fuite (9) sont entourés par un milieu commun hermétiquement clos.

10. Dispositif selon l'une quelconque des revendications 1 à 9,
**caractérisé en ce que** le convertisseur de mesure présente plusieurs sondes de mesure (10) agencées de manière radialement répartie autour d'un centre (22), et au moins un trajet de courant de fuite (9) est agencé dans au moins un secteur entre des sondes de mesure (10) voisines.

11. Dispositif selon l'une quelconque des revendications 1 à 10,
**caractérisé en ce qu'**une sonde de mesure (10) présente une prise de potentiel (23) avec laquelle est mise en contact électrique une première extrémité du trajet de courant de fuite (9).

12. Dispositif selon la revendication 11,
**caractérisé en ce qu'**une seconde extrémité du trajet de courant de fuite (9) est mise en contact avec le potentiel de terre.

13. Dispositif selon l'une quelconque des revendications 1 à 12,
**caractérisé en ce que** le triangle est un triangle équilatéral.

14. Dispositif de transmission d'énergie électrique présentant un conducteur de phase et un dispositif de commutation (13, 14, 15, 18a, 18b) permettant de commuter le conducteur de phase,
**caractérisé en ce que** le dispositif de transmission d'énergie électrique est une installation de commutation isolée par un fluide sous pression et présente un dispositif selon l'une quelconque des revendications 1 à 13.
